(19) Europäisches Patentamt
European Patent Office
Office européen des brevets

(11) Numéro de publication: **0 377 357 B1**

(12) # FASCICULE DE BREVET EUROPEEN

(45) Date de publication de fascicule du brevet: **23.03.94**

(51) Int. Cl.$^5$: **C08G 63/42**, C08G 63/58

(21) Numéro de dépôt: **89403349.7**

(22) Date de dépôt: **04.12.89**

(54) **Procédé de condensation d'au moins un époxyde sur au moins un anhydride cyclique en présence d'un catalyseur à base de titane.**

(30) Priorité: **07.12.88 FR 8816190**

(43) Date de publication de la demande:
**11.07.90 Bulletin 90/28**

(45) Mention de la délivrance du brevet:
**23.03.94 Bulletin 94/12**

(84) Etats contractants désignés:
**AT BE CH DE ES FR GB IT LI LU NL SE**

(56) Documents cités:
**EP-A- 0 103 305**
**GB-A- 1 101 247**
**US-A- 4 565 845**

(73) Titulaire: **INSTITUT FRANCAIS DU PETROLE**
**4, Avenue de Bois Préau**
**F-92502 Rueil-Malmaison(FR)**

Titulaire: **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07(FR)**

Titulaire: **ELF FRANCE**
**Tour Elf**
**2, Place de la Coupole**
**LA DEFENSE 6 - 92400 Courbevoie(FR)**

(72) Inventeur: **Garapon, Jacques**
**120, rue Mazenod**
**F-69003 Lyon(FR)**
Inventeur: **Touet, Rémi**
**Résidence Mutualiste**
**Le Fontanil**
**F-38120 Saint Egreve(FR)**
Inventeur: **Huet, Catherine**
**50, route de Givry**
**Saint Remy**
**F-71100 Chalon sur Saone(FR)**
Inventeur: **Damin, Bernard**
**162, Gran Rue**
**F-69600 Oullins(FR)**

(74) Mandataire: **Andreeff, François et al**
**INSTITUT FRANCAIS DU PETROLE**
**4, avenue de Bois-Préau**
**F-92502 Rueil-Malmaison (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 377 357 B1

## Description

La présente invention concerne un procédé de condensation d'au moins un époxyde sur au moins un anhydride cyclique d'un acide dicarboxylique en présence d'un catalyseur constitué d'au moins un complexe péroxydique du titane de type péroxo.

La présente invention a également pour objet un procédé de production de polyesters alternés, saturés ou insaturés, par condensation d'au moins un époxyde sur au moins un anhydride cyclique d'un acide dicarboxylique.

Ce type de polyestérification se différencie du procédé classique, où l'on met en oeuvre un composé dihydroxylé (ou diol) et un anhydride ou un acide dicarboxylique, en particulier par le fait que la température de polycondensation ne dépasse habituellement pas 150° C et surtout par le fait qu'il ne se dégage aucune matière volatile au cours de la réaction.

La condensation entre un époxyde ou dérivé époxydé et un anhydride cyclique a suscité de nombreux travaux, résumés, par exemple, par LUSTON et VASS (Advances in Polymer Sciences 1984, Vol. 56, pages 91 et suivantes) ou par ISHII et SAKAI (Ring opening polymerisation, pages 13 et suivantes, édité par K.C. FRISCH et S. REEGEN, MARCEL DEKKER 1969).

L'examen des travaux cités montre que le problème majeur posé par ce type de condensation est l'homopolymérisation de l'époxyde conduisant à l'obtention d'un polyether-polyester séquencé ou à des mélanges de polymères, en particulier lorsque l'on utilise des acides de LEWIS ($TiCl_4$, $BF_3$....) comme catalyseur de condensation. Afin de pallier cet inconvénient, on a proposé, dans l'art antérieur, l'emploi de catalyseurs anioniques ou de coordination.

FISHER (Journal of Polymer Science 1960, Vol. 44, pages 155 et suivantes) a montré que l'utilisation d'amine tertiaire comme catalyseur de condensation d'un anhydride sur un époxyde permet d'obtenir une condensation alternée.

Cependant, ce type de catalyseur s'avère inopérant dans le cas de l'anhydride maléique, vraisemblablement en raison des réactions secondaires complexes avec les amines au niveau de la double liaison maléique. D'autres types de catalyseurs anioniques, tels que les sels de métaux alcalins ou les sels de tétraalkylammonium, ont également été utilisés. Par exemple WADILL, MILLIGAN et PEPPEL (Industrial and Engineering Chemistry, Product Research and Development 1964, Vol. 3 part. 1, pages 53 et suivantes) décrivent l'emploi du chlorure de lithium en présence de substances protoniques à 150° C. Ces auteurs suggérent que l'homopolymérisation de l'époxyde intervient pour une part dans leur procédé. Comme exemple de catalyseur de coordination, on peut citer le dialkylzinc mentionné par INOUE et al. (Makromoleculare Chemie 1969, Vol. 126, pages 250 et suivantes) ; ce type de catalyseur n'est en fait applicable, d'après INOUE et al., qu'au seul anhydride phtalique. Le brevet US-A-4 565 845 décrit l'utilisation d'un système catalytique comprenant une porphyrine d'aluminium qui permet d'obtenir un polyester ayant une assez bonne alternance entre le motif provenant de l'anhydride et celui provenant de l'époxyde.

D'autres catalyseurs, à base de métaux de transition, ont également été décrits antérieurement. C'est ainsi que FISCHER (cité supra) observe une homopolymérisation partielle de l'époxyde glycidique lors de sa polycondensation avec l'anhydride phtalique en présence de titanate de tétrabutyle.

Le brevet US-A-3 546 176 revendique l'utilisation du titanate de tétrabutyle pour la production de polyesters insaturés à partir d'anhydrides d'acides insaturés et d'époxydes. Cependant, comme le confirmera un test effectué par la demanderesse et décrit ci-après, ce catalyseur ne permet pas d'obtenir une bonne alternance des motifs provenant de l'anhydride et de l'époxyde.

De façon surprenante on a découvert qu'il est possible d'obtenir, avec une conversion élevée des produits de départ, un polyester alterné, par condensation d'au moins un époxyde sur au moins un anhydride cyclique d'un acide dicarboxylique, en utilisant comme catalyseur de condensation au moins un complexe péroxydique du titane. Au sens de la présente invention, on désigne par complexe péroxydique du titane, un complexe de type péroxo, de forme A, dans lequel le titane est lié à une molécule d'oxygène porteuse de deux charges négatives ($O_2^{2-}$) :

(A) 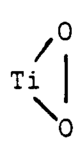

Les complexes péroxydiques que l'on utilise dans la présente invention sont, de préférence, ceux correspondant à l'une des formules gérérales (I) à (III) suivantes :

(I) 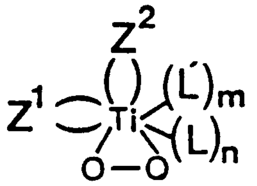

(II) 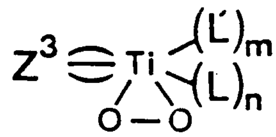

(III) 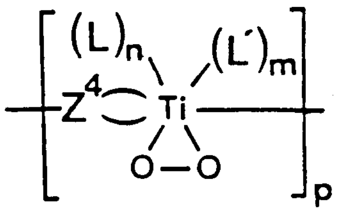

dans lesquelles n et m sont, indépendamment l'un de l'autre, zéro ou un, p est un nombre supérieur ou égal à 2, $Z^1$ et $Z^2$, indentiques ou différents, représentent chacun un anion ou un groupement monoanionique bidenté, $Z^3$ représente un dianion ou un groupement dianionique tri- ou tétra-denté, $Z^4$ représente un groupement dianionique bidenté ou tridenté, L et L′, identiques ou différents, représentent chacun une molécule d'eau, un alcool ou un ligand monodenté ou bidenté à caractère électrodonneur.

Dans les complexes précités de formules générales (I) à (III) :

- $Z^1$ et $Z^2$, identiques ou différents, sont de préférence chacun choisis dans le groupe formé par les composés mono- ou poly-aromatiques hétérocycliques azotés, possédant au moins un groupement carboxylique vicinal de l'azote, éventuellement substitués par au moins un groupement Y choisi dans le groupe formé par un groupement alkyle (par exemple de $C_1$ à $C_{18}$), aryle (par exemple de $C_6$ à $C_{18}$), alkyloxy- (par exemple de $C_1$ à $C_{18}$), aryloxy- (par exemple de $C_6$ à $C_{18}$), nitro, carboxylate (par exemple de $C_2$ à $C_{18}$), carboxyamide (par exemple de $C_1$ à $C_{18}$), hydroxyle et halogène (chlore, brome, fluor ou iode), l'hydroxy-8 quinoléine, l'hydroxy-5 ou -8 quinoxaline, l'hydroxy-8 quinazoline, l'hydroxy-8 cinnoline, l'hydroxy-4 ou -5 acridine, l'hydroxy-1, -4, -6 ou -9 phénazine et les dérivés de ces composés hydroxylés hétérocycliques azotés substitués par au moins un groupement T choisi dans le groupe formé par un groupement alkyl- (par exemple de $C_1$ à $C_{18}$), aryle (par exemple de $C_6$ à $C_{18}$), alkyloxy- (par exemple de $C_1$ à $C_{18}$), aryloxy- (par exemple de $C_6$ à $C_{18}$), nitro, carboxylate (par exemple de $C_2$ à $C_{18}$), carboxyamide (par exemple de $C_1$ à $C_{18}$) et halogène (chlore, brome, fluor ou iode) ;
- $Z^3$ et $Z^4$, identiques ou différents, sont, de préférence, chacun un composé mono- ou poly-aromatique hétérocyclique azoté, possédant au moins deux groupements carboxyliques dont l'un au moins est vicinal d'un atome d'azote, éventuellement substitué par au moins un groupement Y tel que défini ci-avant ;
- L et L′, identiques ou différents, représentent chacun une molécule d'eau, un alcool ou un ligand choisi de préférence dans le groupe formé par une amine aromatique, un amide linéaire ou cyclique, un phosphoramide, un oxyde d'amine aliphatique ou aromatique, un oxyde de phosphine, d'arsine ou de stibine, un composé 1,3-dicétonique et un composé hydroxy-aromatique comportant un groupement cétonique ou aldéhydique en ortho du groupe hydroxyle.

Lorsqu'un ou plusieurs groupements Y sont présents dans la molécule, ils peuvent occuper une ou plusieurs des positions quelconques des noyaux aromatiques distincts ou accolés. Ainsi, par exemple, dans le cas des complexes de formule générale (I), $Z^1$ et $Z^2$ peuvent avoir la formule représentative suivante :

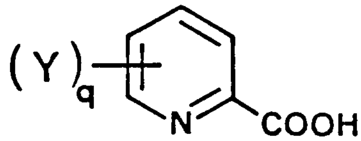

dans laquelle q est zéro ou un nombre entier, par exemple un nombre entier de 1 à 3. On peut citer à titre d'exemples non limitatifs de tels composés mono- ou poly-aromatiques : l'acide pyridine 2-carboxylique (ou picolinique), l'acide pyrazine 2- ou 6-carboxylique, l'acide quinoléine 2-carboxylique, l'acide isoquinoléine 1- ou 3-carboxylique et les acides 3-, 4-, 5- et 6- chloro, bromo, nitro, hydroxy, méthyle, éthyle, propyles, butyles, phényle et benzyle picoliniques.

Dans le cas des complexes de formules générales (II) ou (III), $Z^3$ et $Z^4$ peuvent avoir la formule représentative suivante :

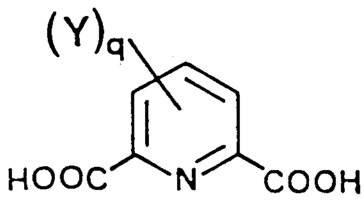

dans laquelle q a la définition donnée ci-avant. On peut citer à titre d'exemples non limitatifs de tels composés mono- ou poly-aromatiques : l'acide pyridine 2,6-dicarboxylique (ou dipicolinique), l'acide pyrazine 2,6-dicarboxylique, l'acide isoquinoléine 1,3-dicarboxylique, l'acide pyrimidine 2,4- ou 2,6-dicarboxylique et les acides 3-, 4- et 5- chloro, bromo, nitro, hydroxy, méthyle, éthyle, propyles, butyles, phényle et benzyle dipicoliniques ; dans le cas des complexes de formule générale (III), on peut en outre citer à titre d'exemples non limitatifs de tels composés mono- ou poly-aromatiques : l'acide pyridine 2,3-, 2,4- ou 2,5-dicarboxylique, l'acide pyrazine 2,3- ou 2,5-dicarboxylique, l'acide isoquinoléine 3,4- ou 1,8-dicarboxylique, l'acide quinoléine 2,3-, 2,4- ou 2,8-dicarboxylique et l'acide pyrimidine 4,5- ou 5,6-dicarboxylique.

Dans les complexes de formules générales (I), (II) ou (III), L et L′, identiques ou différents, sont de préférence chacun choisis dans le groupe formé par l'eau, un alcool (tel que le méthanol), un composé 1,3-dicétonique (tel que l'acétylacétone), un composé hydroxyaromatique comportant un groupement cétonique ou aldéhydique en ortho du groupe hydroxy (tel que l'aldéhyde salicylique ou l'orthohydroxyacétophénone), une amine aromatique comportant un ou plusieurs noyaux benzéniques accolés ou non et un ou plusieurs atomes d'azote par noyau (telle que la pyridine, la quinoléine, l'acridine , les 2-, 3- et 4-picolines, la collidine, la 4-diméthylaminopyridine, l'acide picolinique, le picolinate de méthyle, l'acide nicotinique, l'acide isonicotinique, le N-méthyl-imidazole, la 2,2′-bipyridine,l'orthophénantroline), une amide linéaire ou cyclique, par exemple de formule $R^5$-CO-$NR^6R^7$ dans laquelle $R^5$, $R^6$ et $R^7$, identiques ou différents, représentent chacun un atome d'hydrogène ou un radical hydrocarboné comportant de 1 à 30 atomes de carbone ou deux au moins de ces radicaux $R^5$, $R^6$ et $R^7$ forment ensemble avec les atomes auxquels ils sont liés un cycle comprenant 4 à 30 atomes de carbone (à titre d'exemples d'amide, on peut citer le diméthylformamide, le diéthylformamide, le diméthylacétamide, la N,N-diméthylbenzamide, la N,N-diéthylnicotinamide, la N-acétyl-morpholine, la N-benzoylpipéridine, la N-formylpipéridine, la N-acétylpipéridine, la N-méthylpyrrolidone, la N-éthylpyrrolidone, la N-phénylpyrrolidone, le N-méthylvalérolactame, le N-méthylcaprolactame,la N,N-diéthylpicolinamide et la N,N-diméthylpicolinamide), un phosphoramide, par exemple de formule $(R^8 R^9 N)_3 PO$ dans laquelle $R^8$ et $R^9$, identiques ou différents, représentent chacun un radical hydrocarboné comportant de 1 à 30 atomes de carbone, (tel que l'hexaméthylorthophosphotriamide, l'hexaéthylorthophosphotriamide et l'octaméthylpyrophosphoramide), un oxyde d'amine aliphatique ou aromatique (tel que l'oxyde de triméthylamine, l'oxyde de N-méthylmorpholine, l'oxyde de pyridine, l'oxyde des 2-, 3- et 4-picolines, l'oxyde de quinoléine et la 2,2′-bipyridine-N oxyde), un oxyde de phosphine, d'arsine ou de stibine (tel que la triphénylphosphine oxyde, la triphénylarsine oxyde, la triphénylstibine oxyde, la triméthylphosphine oxyde, la méthyldiphénylphosphineoxyde, la diéthylphénylphosphine oxyde et la trimorpholinophosphine oxyde).

Les complexes péroxydiques de titane employés comme catalyseurs de condensation dans la présente invention peuvent être préparés par toute méthode de synthèse des complexes péroxydiques de métaux de transition bien connue de l'homme du métier. Ces complexes seront par exemple obtenus en utilisant l'un des procédés de synthèse décrit par POSTEL et al. (Inorganica Chimica Acta, 1986, vol. 113, pages 173 et suivantes) ou par MIMOUN et al. (Inorganic Chemistry, 1982, vol. 21, pages 1303 et suivantes).

Dans une forme de réalisation avantageuse de l'invention, on emploie, avec le catalyseur au titane, au moins un cocatalyseur choisi dans le groupe formé par les sels d'"onium" quaternaires bien connus de l'homme du métier et répondant à la formule générale suivante :

$(R^{10}\ R^{11}\ R^{12}\ R^{13}\ M)^{+}X^{-}$

dans laquelle M est un élément appartenant au groupe V A (16) de la classification périodique des éléments (Handbook of Chemistry and Physics, 68ème édition, 1987-1988) et, de préférence, l'azote ou le phosphore ; $X^-$ est un anion stable tel que, par exemple, le chlore ou le brome et, de préférence, le chlore ; $R^{10}$, $R^{11}$, $R^{12}$ et $R^{13}$, identiques ou différents, représentent chacun un atome d'hydrogène ou un groupe hydrocarboné comprenant de 1 à 30 atomes de carbone. On peut citer, à titre d'exemples non limitatifs de sels d'"onium" (ammmonium et phosphonium) quaternaires, les bromures et les chlorures de tétraméthylonium-, tétraéthylonium, tétrapropylonium, tétrabutylonium, tétraphénylonium, tétrabenzylonium, méthyltributylonium, méthyltriéthylonium, méthyltriphénylonium, butyltriphénylonium, éthyltriphénylonium, benzyltriméthylonium, benzyltributylonium, benzyltriphénylonium, phényltriméthylonium, octadécyltriméthylonium, naphtyltriméthylonium, tolyltriméthylonium, diméthyldioctadécylonium, diméthyldihexadécylonium et tricaprylylméthylonium (mélange $C_8$ et $C_{10}$ avec prédominance de $C_8$, connu sous le nom d'ALIQUAT 336(R)).

L'anhydride cyclique d'un acide dicarboxylique que l'on emploie dans la présente invention est de préférence un anhydride cyclique d'un acide dicarboxylique vicinal, saturé ou insaturé.

L'anhydride cyclique utilisé comporte habituellement de 4 à 160 atomes de carbone et, de préférence, de 4 à 90 atomes de carbone dans sa molécule.

On peut ainsi citer, à titre d'exemples, l'anhydride maléiques, les anhydrides akylmaléiques (tels que par exemple l'anhydride citraconique (méthylmaléique)), les anhydrides halogéno-maléiques (tels que par exemple, les anhydrides chloro- et bromo-maléiques), l'anhydride succinique, les anhydrides alcénylsucciniques (tels que, par exemple, l'anhydride itaconique (méthylènesuccinique), l'anhydride n-octadécénylsuccinique et l'anhydride dodécénylsuccinique), les anhydrides polyalcénylsucciniques ayant, habituellement, une masse moléculaire moyenne en nombre d'environ 200 à 3000 et le plus souvent d'environ 250 à 2000 (tels que, par exemple, les anhydrides polypropénylsucciniques, en particulier l'anhydride tétrapropénylsuccinique, et les anhydrides polyisobuténylsucciniques souvent dénommmés PIBSA), l'anhydride phtalique, les anhydrides phtaliques substitués par au moins un atome d'halogène et/ou au moins un groupe alkyle, par exemple un groupe alkyle inférieur ayant de 1 à 4 atomes de carbone, l'anhydride trimellitique, l'anhydride cyclohexane-dicarboxylique-1,2, les anhydrides cyclohexane-dicarboxyliques-1,2 substitués par au moins un atome d'halogène et/ou au moins un groupe alkyle, par exemple un groupe alkyle inférieur ayant de 1 à 4 atomes de carbone, l'anhydride nadique (bicyclo [2,2,1] heptène-5dicarboxylique-2,3) et les anhydrides nadiques substitués par au moins un atome d'halogène et/ou au moins un groupe alkyle, par exemple un groupe alkyle inférieur ayant de 1 à 4 atomes de carbone. On peut encore citer, à titre d'exemples d'anhydride cyclique d'un acide dicarboxylique non vicinal, l'anhydride glutarique, les anhydrides glutariques substitués par au moins un atome d'halogène et/ou au moins un groupe alkyle, par exemple un groupe alkyle inférieur ayant de 1 à 4 atomes de carbone, l'anhydride glutaconique et les anhydrides glutaconiques substitués par au moins un atome d'halogène et/ou au moins un groupe alkyle, par exemple un groupe alkyle inférieur ayant de 1 à 4 atomes de carbone.

L'époxyde que l'on emploie dans la présente invention est habituellement un composé monoépoxydé répondant à la formule générale

(IV) 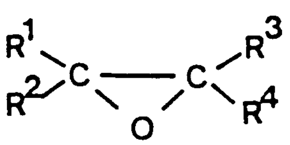

dans laquelle $R^1$ et $R^3$, identiques ou différents, représentent chacun un atome d'hydrogène ou un groupe alkyle inférieur ayant de 1 à 4 atomes de carbone tel que méthyle, éthyle, propyles et butyles ; $R^2$ et $R^4$, identiques ou différents, représentent chacun un atome d'hydrogène, un groupe hydrocarboné, éventuellement substitué par au moins un atome d'halogène, ayant de 1 à 30 atomes de carbone (tel que, par exemple, un groupe alkyle ayant de 1 à 30 atomes de carbone, un groupe alcényle ayant de 2 à 30 et le plus souvent de 3 à 30 atomes de carbone, un groupe cycloaliphatique ayant de 3 à 30 et le plus souvent de 5 à 30 atomes de carbone, un groupe aryle ayant de 6 à 30 atomes de carbone, un groupe aryl-alkyle (aralkyle) ou un groupe akyl-aryle (alkaryle) ayant de 7 à 30 atomes de carbone ou les groupes correspondants substitués par au moins un atome d'halogène), un groupe de formule $R^5$-O-$R^6$- dans laquelle $R^5$ représente un groupe hydrocarboné, éventuellement substitué par au moins un atome d'halogène, ayant de 1 à 30 atomes de carbone tel que, par exemple, les groupes hydrocarbonés décrits ci-avant et

$R^6$ représente un groupe hydrocarboné divalent ayant de 1 à 30 atomes de carbone tel que, par exemple, un groupe alkylène ayant de 1 à 30 atomes de carbone, un groupe alcénylène ayant de 2 à 30 et le plus souvent de 4 à 30 atomes de carbone, un groupe cycloalkylène ayant de 3 à 30 et le plus souvent de 5 à 30 atomes de carbone ou un groupe arylène ayant de 6 à 30 atomes de carbone ; $R^2$ peut également représenter un groupe de formule

$$R^5-O-\underset{\underset{O}{\|}}{C}-R^6-$$

ou un groupe de formule

$$R^5-\underset{\underset{O}{\|}}{C}-O-R^6-,$$

dans lesquelles$R^5$ et $R^6$ ont la définition donnée ci-avant, tel que, par exemple, un groupe alkoxycarbonylalkylène ou un groupe alkylcarbonyloxyalkylène ; $R^2$ et $R^4$ peuvent également former ensemble avec les atomes de carbone auxquels ils sont liés un cycle saturé ou insaturé ayant par exemple de 4 à 30 atomes de carbone.

On peut également employer des mélanges de composés époxydés comprenant habituellement une proportion d'au moins 80 %, de préférence d'au moins 90 % et par exemple d'au moins 95 % en moles de composés monoépoxydés et contenant des composés qui renferment plusieurs groupes époxydes (cycles oxirannes dans leur molécule, par exemple, deux ou trois groupes époxydes ; la proportion molaire des composés polyépoxydés dans le mélange représente le complément à 100 %.

Le composé époxydé utilisé comporte généralement de 2 à 62 atomes de carbone et, de préférence, de 2 à 40 atomes de carbone dans sa molécule.

A titre d'exemples de composés époxydés, on peut citer : l'oxyde d'éthylène, l'oxyde de propylène, l'époxy-1,2 butane, l'époxy-1,2 pentane, l'époxy-1,2 hexane, l'époxy-1,2 heptane, l'époxy-1,2 octane, l'époxy-1,2 nonane, l'époxy-1,2 décane, l'époxy-1,2 undécane, l'époxy-1,2 dodécane, l'époxy-1,2 tétradécane, l'époxy-1,2 pentadécane, l'époxy-1,2 hexadécane, l'époxy-1,2 heptadécane, l'époxy-1,2 octadécane, l'époxy-1,2 nonadécane, l'époxy-1,2 eicosane, l'époxy-1,2 docosane, l'époxy-1,2 tétracosane, l'époxy-1,2 hexacosane, les polybutènes époxydés de masse moléculaire moyenne ($\overline{M}n$) comprise entre environ 100 et environ 1 000, l'époxy-2,3 butane, l'époxy-2,3 pentane, l'époxy-2,3 hexane, l'époxy-3,4 heptane, l'époxy-2,3 octane, l'époxy-3,4 octane, l'époxy-3,4 décane, l'époxy-9,10 octadécane, l'éthoxy-3 époxy-1,2 propane, le propoxy-3 époxy-1,2 propane, le butoxy-3 époxy-1,2 propane, le pentyloxy-3 époxy-1,2 propane, l'hexyloxy-3 époxy-1,2 propane, l'heptyloxy-3 époxy-1,2 propane, l'octyloxy-3 époxy-1,2 propane, le décyloxy-3 époxy-1,2 propane, le dodécyloxy-3 époxy-1,2 propane, l'acétoxy-1 époxy-2,3 propane, le butyryloxy-1 époxy-2,3 propane, le lauroyloxy-1 époxy-2,3 propane, le myristoyloxy-3 époxy-1,2 propane, le palmitoyloxy-3 époxy-1,2 propane, le stéaroyloxy-3 époxy-1,2 propane, les esters alkyliques, par exemples méthyliques, éthyliques, propyliques, butyliques, éthyl-2 hexyliques et hexadécyliques des acides époxy-3,4 butanoïque, époxy-4,5 pentanoïque, époxy-3,4 nonanoïque, époxy-10,11 undécanoïque, époxy-6,7 octadécanoïque, époxy-12,13 octadécanoïque, époxy-11,12 octadécanoïque, époxy-9,10 octadécanoïque, époxy-11,12 eicosanoïque et époxy-13,14 docosanoïque, le chloro-1 époxy-2,3 propane, l'époxy-2,3 méthyl-2 butane, l'alphapinèneoxyde (triméthyl-2,7,7 oxa-3 tricyclo [4,1,1,0] octane) et l'oxyde de styrène (phényloxiranne).

A titre d'exemples de mélanges de composés époxydés comprenant des polyépoxydes, on peut citer le mélange d'esters alkyliques obtenu par estérification d'un mélange d'époxyacides résultant de l'époxydation d'un mélange d'acides gras éthyléniquement insaturés.

Le mélange d'acides gras éthyléniquement insaturé est par exemple un mélange comportant, en proportions pondérales données dans le tableau I ci-dessous, des acides (saturés et insaturés) ayant de 12 à 20 atomes de carbone dans leur molécule. Ce mélange est habituellement dénommé oléine.

Tableau I

| ACIDES | $C_{12}^{*}$ | $C_{14}^{*}$ | $C_{14.1}$ | $C_{15}^{*}$ | $C_{16}^{*}$ | $C_{16.1}$ | $C_{17.1}$ | $C_{18}^{*}$ | $C_{18.1}$ | $C_{18.2}$ | $C_{18.3}$ | $C_{20.1}$ |
|---|---|---|---|---|---|---|---|---|---|---|---|---|
| %Poids | 0,8 | 2,7 | 1,0 | 0,5 | 5,0 | 5,5 | 1,5 | 1,5 | 68,0 | 10,0 | 2,5 | 1,0 |

* acides saturés

Dans ce tableau I, $C_{p.1}$ désigne des acides comportant une insaturation éthylénique, $C_{p.2}$ désigne des acides comportant 2 insaturations éthyléniques et $C_{p.3}$ désigne des acides comportant 3 insaturations éthyléniques (p est le nombre d'atomes de carbone).

Pour l'estérification du mélange d'époxyacides, on utilise, par exemple, un mélange d'alcools comprenant environ en poids 95 % d'alcool n-hexadécylique, 3 % d'alcool n-octadécylique et 2 % d'alcools ayant plus de 18 atomes de carbone dans leur molécule.

La condensation entre au moins un époxyde et au moins un anhydride cyclique d'un acide dicarboxylique peut être effectuée en présence ou en absence de solvant. On préfère en général utiliser un solvant, tel que par exemple un solvant hydrocarboné. A titre d'exemples non limitatifs de solvants hydrocarbonés utilisables, on peut citer le benzène, le toluène, le xylène, l'éthylbenzène, le cyclohexane, l'hexane ou un mélange d'hydrocarbures tel que, par exemple, une coupe hydrocarbonée à point d'ébulition élevée telle qu'un gazole, un kérosène ou la coupe commerciale SOLVESSO 150 (190- 209 °C) contenant 99 % en poids de composés aromatiques. On peut également utiliser des mélanges de solvants, par exemple un mélange de xylènes.

La réaction de condensation est habituellement effectuée à une température d'environ 30 à environ 200 °C, de préférence d'environ 40 à environ 180 °C et par exemple d'environ 60 à environ 150 °C. On opère généralement sous pression normale ou sous la pression engendrée par les constituants du mélange, mais il est possible d'opérer sous une pression plus élevée.

La condensation entre l'anhydride cyclique et l'époxyde est en général effectuée en employant des quantités de chacun de ces deux composés telles que le rapport molaire époxyde/anhydride cyclique soit d'environ 0,5:1 à environ 2:1, de préférence d'environ 0,7:1 à environ 1,3:1 et, de manière encore plus préférée, d'environ 0,9:1 à environ 1,1:1.

La durée de la réaction est généralement d'environ 1 à environ 24 heures et par exemple d'environ 2 à environ 12 heures. Cette durée est de préférence celle qui correspond, dans les conditions choisies, à une disparition pratiquement complète de l'un des réactifs (époxyde ou anhydride) mis en jeu dans la réaction.

Le catalyseur à base de titane peut être ajouté au mélange d'époxyde et d'anhydride soit sous forme solide, soit sous forme diluée (solution ou dispersion) dans un solvant qui est habituellement le même que celui employé pour la condensation.

La quantité de catalyseur à base de titane employée, exprimée en atome-gramme de titane pour 100 moles d'époxyde, est généralement de 0,05 à 5 % et, de préférence, de 0,1 à 2 %. Lorsque l'on utilise un cocatalyseur en association avec le catalyseur péroxydique de titane, la quantité de ce cocatalyseur, exprimée en pour-cent molaire par rapport à la quantité en moles d'époxyde mis en jeu dans la réaction, est habituellement de 0,01 à 5 %, le plus souvent de 0,05 à 5 % et, de préférence, de 0,1 à 2 %. Le rapport atome-gramme de titane sur la quantité molaire de cocatalyseur est en général de 5:1 à 0,2:1, le plus souvent de 2:1 à 0,5:1 et, de préférence, de 1,4:1 à 0,7:1. La quantité de cocatalyseur est de préférence du même ordre de grandeur que la quantité de catalyseur à base de titane.

Le polyester issu de la condensation selon l'invention est un composé qui présente habituellement une masse moléculaire moyenne en nombre d'environ 400 à 50 000 et dont les motifs issus de l'époxyde et de l'anhydride sont régulièrement alternés. Par ailleurs, l'utilisation de complexes péroxydiques du titane de type péroxo permet de réduire très largement l'homopolymérisation de l'époxyde par rapport à ce que l'on obtient en utilisant du titanate de butyle, tout en conservant une vitesse de réaction élevée, ce qui permet aussi d'obtenir, à isoconditions, une conversion des produits de départ relativement élevée comme le montrent les exemples suivants.

Ces exemples illustrent l'invention. Les exemples 6, 8, 9 et 11 sont donnés à titre de comparaison.

Exemple 1

On introduit, dans un réacteur de 250 ml, muni d'un système d'agitation et d'un système de régulation de température, 14,7 g (0,15 mole) d'anhydride maléique, 27,6 g (0,15 mole) d'époxy-1,2 dodécane, 7,4 g de phényldodécane, 17,6 g de toluène et 0,55 g de complexe de titane de formule (I)

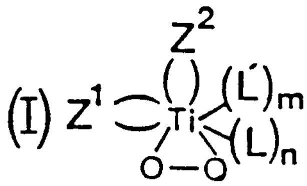

dans laquelle m = n = 0 et $Z^1$ et $Z^2$, identiques, représentent chacun l'hydroxy-8 quinoléine. Ce complexe correspond au composé numéro 4 décrit par MIMOUN et al cité ci-avant (Inorganic Chemistry, 1982, vol. 21, pages 1303 et suivantes). Le mélange est porté à 100 °C et maintenu, sous agitation constante, à cette température pendant 6 heures. La réaction est suivie par infrarouge et par Chromatographie d'Exclusion sur Gel (G P C). En infrarouge, on observe l'apparition d'une bande ester à 1730 $cm^{-1}$ et la disparition des bandes carbonyles de l'anhydride à 1770 $cm^{-1}$ et 1840 $cm^{-1}$. On a représenté sur la figure 1 le pourcentage de conversion de chacun des constituants en fonction du temps en heure (mesure par G P C ; le phényldodécane présent dans le milieu de réaction est utilisé comme étalon interne). La courbe A concerne l'anhydride maléique et la courbe B l'époxy-1,2 dodécane. Après 6 heures de réaction à 100° C, la conversion de l'époxyde est de 96 % et celle de l'anhydride maléique de 90 %. Le polyester obtenu a une masse moléculaire moyenne en nombre, par rapport à un étalonnage sur polystyrène, de 6810. La figure 1 montre que les conversions de l'époxyde et de l'anhydride sont, en particulier pendant les 4 premières heures de la réaction, sensiblement égales à chaque instant, ce qui permet de conclure à la formation d'un polymère parfaitement alterné. L'homopolymérisation de l'époxyde est faible : elle n'atteint pas 10 % au bout des 6 heures de réaction.

Exemple 2

On opère dans les mêmes conditions que dans l'exemple 1, mais en maintenant la température à 80° C et en employant un complexe de titane de formule (I) dans laquelle $Z^1$ et $Z^2$, identiques, représentent chacun l'acide picolinique (m = 0 et n = 1), L représente l'hexaméthylorthophosphotriamide. On introduit 0,75 g (1,5 x $10^{-3}$ atome-gramme de titane) de ce complexe dans le mélange réactionnel.

Ce complexe correspond au composé numéro 1 décrit par MIMOUN et al cité ci-avant. Après 6 heures de réaction à 80° C, la conversion de l'anhydride maléique est de 64 % et celle de l'époxyde de 66 %.

La masse moléculaire moyenne en nombre du polyester obtenu, mesurée par rapport à un étalonnage sur polystyrène, est de 3623. On a représenté sur la figure 2 le pourcentage de conversion de chacun des constituants en fonction du temps (en heure). La courbe A concerne l'anhydride maléique et la courbe B l'époxy-1,2 dodécane.

Exemple 3

On répète l'exemple 2, mais on maintient la température à 100° C. Après 6 heures de réaction à 100° C, la conversion de l'époxyde est de 96 % et celle de l'anhydride maléique de 92 %.

Exemple 4

On opère dans les mêmes conditions que dans l'exemple 1, mais en employant un complexe de titane de formule (II)

(II) 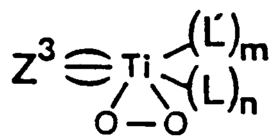

dans laquelle $Z^3$ représente l'acide pyridine 2,6-dicarboxylique, m = 1, n = 1 et L et L′ représentent de l'eau. Après 6 heures de réaction à 100 °C, la conversion de l'anhydride maléique est de 84 % et celle de l'époxyde de 88 %.

Exemple 5

On opère dans les mêmes conditions que dans l'exemple 1, mais en employant un complexe de titane de formule (III)

(III) 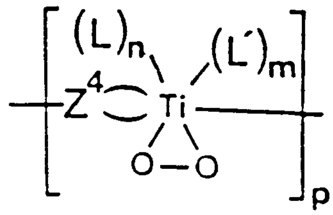

dans laquelle m = 1, n = 1, p = 5 , $Z^4$ représente l'acide pyridine 2,5-dicarboxylique, L représente l'hexaméthylorthophosphotriamide et L′ représente l'eau. Après 6 heures de réaction à 100 °C, la conversion de l'anhydride maléique est de 62 % et celle de l'époxyde de 66 %.

Exemple 6 (comparaison)

On opère dans les mêmes conditions que dans l'exemple 2, mais en introduisant, dans le mélange réactionnel, 0,92 ml d'une solution dans le toluène, à 50 % en poids de titanate de butyle de formule $Ti(OC_4H_9)_4$ (1,5x$10^{-3}$ atome -gramme de titane) comme catalyseur à base de titane.

On a représenté sur la figure 3 le pourcentage de conversion de chacun des constituants en fonction du temps (en heure) .La courbe A concerne l'anhydride maléique et la courbe B l'époxy-1,2 dodécane. Après 6 heures de réaction à 80 ° C, la conversion de l'époxyde est de 100 % et celle de l'anhydride maléique de 74 %. On constate sur la figure 3 que la conversion de l'époxyde est nettement plus rapide que celle de l'anhydride dès le début de la réaction. Le polymère obtenu n'est pas un polymère parfaitement alterné. L'homopolymérisation de l'époxyde est assez élevée et elle dépasse largement 20 % au bout des 6 heures de réaction à 80 °C.

Exemple 7

On opère dans les mêmes conditions que dans l'exemple 3, mais en remplaçant l'anhydride maléique par 22,2 g (0,15 mole) d'anhydride phtalique. On ajoute également dans le milieu réactionnel 0,9 g de chlorure de diméthyldioctadécylammonium (1,5 x $10^{-3}$ mole). Après 6 heures de réaction à 100 °C, la conversion de l'anhydride phtalique est de 96 % et celle de l'époxyde de 96 %.

On a représenté sur la figure 4 le pourcentage de conversion de chacun des constituants en fonction du temps (en heure). La courbe A concerne l'anhydride phtalique et la courbe B l'époxy-1,2 dodécane.

Exemple 8 (comparaison)

On opère dans les mêmes conditions que dans l'exemple 2, mais en employant comme catalyseur à base titane le bis(acétylacétonate) de titanyle de formule $TiO(C_5H_7O_2)_2$ .

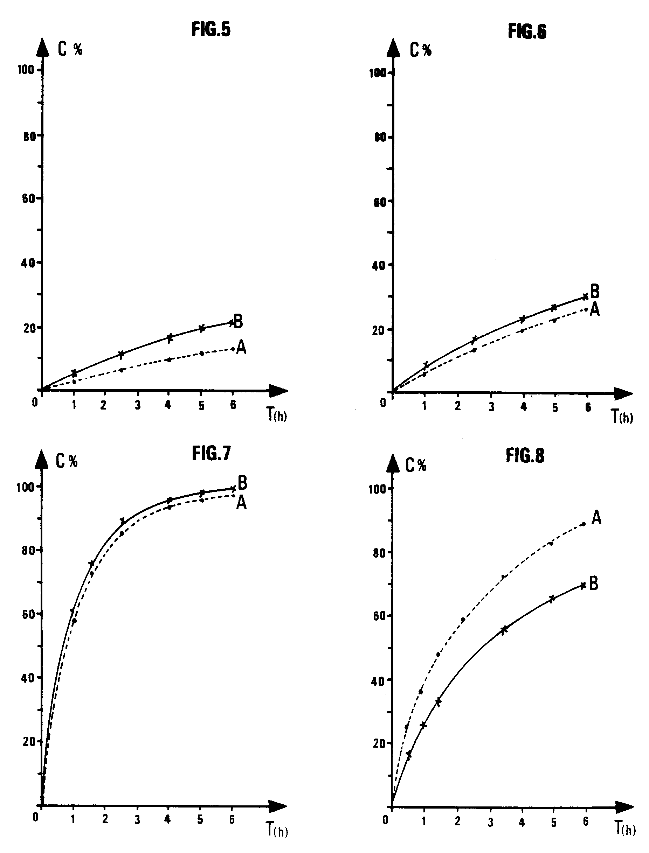

On a représenté sur la figure 5 le pourcentage de conversion de chacun des constituants en fonction du temps (en heure). La courbe A concerne l'anhydride maléique et la courbe B l'époxy-1,2 docécane. Après 6

heures de réation à 80° C, la conversion de l'époxyde est de 21 % et celle de l'anhydride maléique de 13 %.

Les conversions ainsi obtenues sont très largement inférieures à celles obtenues par le procédé selon la présente invention (voir notamment les résultats obtenus dans l'exemple 2).

Exemple 9 (comparaison)

On opère dans les mêmes conditions que dans l'exemple 2, mais en employant comme catalyseur à base de titane le bis (hydroxy-8quinoléïne) de titanyle de formule $TiO(C_9 H_6 NO)_2$.

On a représenté sur la figure 6 le pourcentage de conversion de chacun des constituants en fonction du temps (en heure). La courbe A concerne l'anhydride maléique et la courbe B l'époxy-1,2 dodécane. Après 6 heures de réaction à 80° C, la conversion de l'époxyde est de 30 % et celle de l'anhydride maléique de 27 %.

Les conversions ainsi obtenues sont très largement inférieures à celles obtenues par le procédé selon la présente invention (voir notamment les résultats obtenus dans l'exemple 2).

Exemple 10

On répète l'exemple 2, mais on utilise 0,35 g du même complexe de titane et on ajoute au mélange réactionnel 0,45 g de chlorure de diméthyldioctadécylammonium. La température est maintenue à 100°C. Après 6 heures de réaction à 100° C, la conversion de l'époxyde est de 99 % et celle de l'anhydride maléique de 98 %.

On a représenté sur la figure 7 le pourcentage de conversion de chacun des constituants en fonction du temps (en heure). La courbe A concerne l'anhydride maléique et la courbe B l'époxy-1,2 dodécane.

Exemple 11 (comparaison)

On repète l'exemple 10, mais on n'utilise pas de complexe de titane et on ajoute au mélange réactionnel 0,9 g (au lieu de 0,45 g) de chlorure de diméthyldioctadécylammonium. Après 6 heures de réaction à 100° C, la conversion de l'époxyde est de 70 % et celle de l'anhydride maléique de 90 %. On remarque dans ce cas une disparition relativement importante de l'anhydride maléique dès le début de la réaction avec un noircissement très marqué du milieu réactionnel. On a représenté sur la figure 8 le pourcentage de conversion de chacun des constituants en fonction du temps (en heure). La courbe A concerne l'anhydride maléique et la courbe B l'époxy-1,2 dodécane. On constate sur cette figure que l'anhydride maléique est consommé plus rapidement que l'époxyde dès le début de la réaction.

Le polymère obtenu n'est pas un polymère parfaitement alterné. De nombreux sous-produits de réaction se forment par dégradation de l'anhydride maléique en présence du composé d'ammonium quaternaire, ce qui provoque le noircissement constaté.

Exemple 12

On répète l'exemple 3, mais en utilisant comme composé époxydé l'ester éthyl-2 hexylique de l'acide époxy-9,10 octadécanoïque.

Après 6 heures de réation à 100°C, la conversion de l'époxyde est de 60 % et celle de l'anhydride maléique de 57 %.

**Revendications**

1. Procédé de condensation d'au moins un époxyde sur au moins un anhydride cyclique d'un acide dicarboxylique en présence d'un catalyseur constitué d'au moins un complexe péroxydique du titane de type péroxo.

2. Procédé selon la revendication 1 dans lequel ledit complexe péroxydique du titane répond à l'une des formules générales suivantes:

(I) 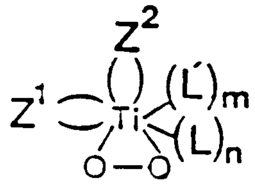

(II) 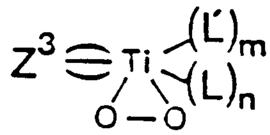

(III) 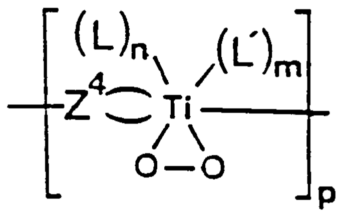

dans lesquelles n et m sont, indépendamment l'un de l'autre, zéro ou un, p est un nombre supérieur ou égal à 2, $Z^1$ et $Z^2$, identiques ou différents, représentent chacun un anion ou un groupement monoanionique bi-denté, $Z^3$ représente un dianion ou un groupement dianionique tri- ou tétra-denté, $Z^4$ représente un groupement dianionique bidenté ou tridenté, L et L′, identiques ou différents, représentent chacun une molécule d'eau, un alcool ou un ligand mono- ou bi-denté à caractère électrodonneur.

**3.** Procédé selon la revendication 2 dans lequel ledit complexe péroxydique du titane répond à l'une des formules générales (I), (II), et (III) dans lesquelles:

- $Z^1$ et $Z^2$, identiques ou différents, sont chacun choisis dans le groupe formé par les composés mono- ou poly-aromatiques hétérocycliques azotés, possédant au moins un groupement carboxylique vicinal de l'azote, substitués ou non par au moins un groupement Y choisi dans le groupe formé par un groupement alkyle, aryle, alkyloxy-, aryloxy-, nitro-, carboxylate, carboxyamide, hydroxyle et halogène, l'hydroxy-8 quinoléine, l'hydroxy-5 ou -8 quinoxaline, l'hydroxy-8 quinazoline, l'hydroxy-8 cinnoline, l'hydroxy-4 ou -5 acridine, l'hydroxy-1, -4, -6 ou -9 phénazine et les dérivés de ces composés hydroxylés hétérocycliques azotés substitués par au moins un groupement T choisi dans le groupe formé par un groupement alkyle, aryle, alkyloxy-, aryloxy-, nitro-, carboxylate, carboxyamide et halogène ;
- $Z^3$ et $Z^4$, identiques ou différents, sont chacun un composé mono- ou poly-aromatique hétérocyclique azoté, possédant au moins deux groupements carboxyliques dont l'un au moins est vicinal d'un atome d'azote, substitué ou non par au moins un groupement Y tel que défini ci-avant ;
- L et L′, identiques ou différents, representent chacun une molécule d'eau, un alcool ou un ligand choisi dans le groupe formé par une amine aromatique, un amide linéaire ou cyclique, un phosphoramide, un oxyde d'amine aliphatique ou aronmatique, un oxyde de phosphine, d'arsine ou de stibine, un composé 1,3-dicétonique et un composé hydroxy-aromatique comportant un groupement cétonique ou aldéhydique en ortho du groupe hydroxyle.

**4.** Procédé selon l'une des revendications 2 et 3 dans lequel ledit complexe péroxydique du titane répond à la formule générale (I) dans laquelle $Z^1$ et $Z^2$, identiques ou différents, représentent chacun un composé choisi dans le groupe formé par l'acide picolinique, l'acide pyrazine 2- ou 6-carboxylique, l'acide quinoléine 2-carboxylique, l'acide isoquinoléine 1-ou 3-carboxylique, les acides 3-, 4-, 5- et 6-chloro, bromo, nitro, hydroxy, méthyle, éthyle, propyles, butyles, phényle et benzyle picoliniques et l'hydroxy-8 quinoléine.

**5.** Procédé selon l'une des revendications 2 et 3 dans lequel ledit complexe péroxydique du titane répond à la formule générale (II) dans laquelle $Z^3$ est choisi dans le groupe formé par l'acide pyridine 2,6-dicar-boxylique, l'acide pyrazine 2,6-dicarboxylique, l'acide isoquinoléine 1,3-dicarboxylique, l'acide pyrimidine 2,4- ou 2,6-dicarboxylique et les acides 3-, 4- et 5-chloro, bromo, nitro, hydroxy, méthyle, éthyle, propyles, butyles, phényle et benzyle dipicoliniques.

**6.** Procédé selon l'une des revendications 2 et 3 dans lequel ledit complexe péroxydique du titane répond à la formule générale (III) dans laquelle $Z^4$ est choisi dans le groupe formé par l'acide pyridine 2,3-, 2,4-, 2,5- ou 2,6-dicarboxylique, l'acide pyrazine 2,3-,2,5- ou 2,6-dicarboxylique, l'acide isoquinoléine 1,3-, 3,4- ou 1,8-dicarboxylique, l'acide quinoléine 2,3-, 2,4- ou 2,8-dicarboxylique, l'acide pyrimidine 2,4-, 2,6-, 4,5- ou 5,6-dicarboxylique et les acides 3-, 4- et 5-chloro, bromo, nitro, hydroxy, méthyle, éthyle, propyles, butyles, phényle et benzyle dipicoliniques.

**7.** Procédé selon l'une des revendications 2 à 6 dans lequel ledit complexe péroxydique du titane répond à l'une des formules générales (I), (II) ou (III) dans lesquelles L et L′, identiques cu différents, représentent chacun un composé choisi dans le groupe formé par l'eau, le méthanol, l'acétylacétone, l'aldéhyde salicylique, l'orthohydroxyacétophénone, la pyridine, la quinoléine, l'acridine, les 2-, 3-, et 4-picolines, la collidine, la 4-diméthylaminopyridine, l'acide picolinique, le picolinate de méthyle, l'acide nicotinique, l'acide isonicotinique, le N-méthyl-imidazole, la 2,2′-bipyridine, l'orthophénantroline, le diméthylformamide, le diéthylformamide, le diméthylacétamide, la N,N-diméthylbenzamide, la N,N-diéthylnicotinamide, la N-acétyl-morpholine, la N-benzoylpipéridine, la N-formylpipéridine, la N-acétylpipéridine, la N-méthylpyrrolidone, la N-éthylpyrrolidone, la N-phénylpyrrolidone, le N-méthylvalérolacrame, le N-méthylcaprolactame,la N,N-diéthylpicolinamide, la N,N-diméthylpicolinamide, l'hexaméthylorthophosphotriamide, l'hexaéthylorthophosphotriamide, l'octaméthylpyrophosphoramide, l'oxide de triméthylamine, l'oxyde de N-méthylmorpholine, l'oxyde de pyridine, l'oxyde des 2-, 3- et 4-picolines, l'oxyde de quinoléine, la 2,2′-bipyridine-Noxyde, la triphénylphosphine oxyde, la triphénylarsine oxyde, la triphénylstibine oxyde, la triméthylphosphine oxyde, la méthyldiphénylphosphine oxyde, la diéthylphénylphosphine oxyde et la trimorpholinophosphine oxyde.

**8.** Procédé selon l'une des revendications 1 à 7 dans lequel on emploie en outre au moins un cocatalyseur choisi dans le groupe formé par les sels d'ammonium et/ou de phosphonium quaternaire de formule générale $(R^{10} R^{11} R^{12} R^{13} M)^+ X^-$ dans laquelle M représente l'azote ou le phosphore, $X^-$ représente un anion chlore ou un anion brome, et $R^{10}$, $R^{11}$, $R^{12}$ et $R^{13}$, identiques ou différents, représentent chacun un atome d'hydrogène ou un groupe hydrocarboné comprenant de 1 à 30 atomes de carbone.

**9.** Procédé selon l'une des revendications 1 à 8 de condensation d'au moins un époxyde sur au moins un anhydride cyclique d'un acide dicarboxylique vicinal saturé ou insaturé.

**10.** Procédé selon la revendication 9 dans lequel l'anhydride cyclique est choisi dans le groupe formé par l'anhydride maléique, l'anhydride citraconique, les anhydrides halogénomaléiques, l'annydride succinique, les anhydrides alcénylsucciniques ou polyalcénylsucciniques, l'anhydride phtalique, les anhydrides phtaliques substitués par au moins un atome d'halogène et/ou au moins un groupe alkyle, l'anhydride trimellitique, l'anhydride cyclohexanedicarboxylique-1,2, les anhydrides cyclohexanedicarboxyliques-1,2 substitués par au moins un atome d'halogène et/ou au moins un groupe alkyle, l'anhydride nadique, les anhydrides nadiques substitués par au moins un atome d'halogène et/ou au moins un groupe alkyle, l'anhydride glutarique, les anhydrides glutariques substitués par au moins un atome d'halogène et/ou au moins un groupe alkyle, l'anhydride glutaconique et les anhydrides glutaconiques substitués par au moins un atome d'halogène et/ou au moins un groupe alkyle.

**11.** Procédé selon l'une des revendications 1 à 10 de condensation sur au moins un anhydride cyclique d'un acide dicarboxylique d'au moins un époxyde répondant à la formule générale suivante :

(IV) 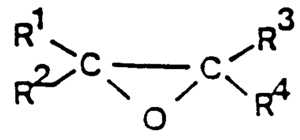

dans laquelle $R^1$ et $R^3$, identiques ou différents, représentent chacun un atome d'hydrogène ou un groupe alkyle inférieur ayant de 1 à 4 atomes de carbone, $R^2$ et $R^4$, identiques ou différents, représentent chacun un atome d'hydrogène, un groupe hydrocarboné, substitué ou non par au moins

un atome d'halogène, ayant de 1 à 30 atomes de carbone, un groupe de formule $R^5$-O-$R^6$- dans laquelle $R^5$ représente un groupe hydrocarboné, substitué ou non par au moins un atome d'halogène, ayant de 1 à 30 atomes de carbone et $R^6$ représente un groupe hydrocarboné divalent ayant de 1 à 30 atomes de carbone, $R^2$ pouvant également représenter un groupe de formule

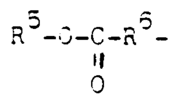

ou un groupe de formule

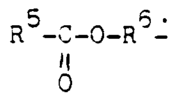

dans lesquelles $R^5$ et $R^6$ ont la définition donnée ci-avant, $R^2$ et $R^4$ pouvant également former ensemble avec les atomes de carbone auxquels ils sont liés un cycle saturé ou insaturé ayant de 4 à 30 atomes de carbone.

**Claims**

1. Process for the condensation of at least one epoxide on at least one cyclic anhydride of a dicarboxylic acid in the presence of a catalyst constituted by at least one peroxide complex of titanium of the peroxo type.

2. Process according to claim 1, wherein the peroxide complex of the titanium is in accordance with one of the following general formulas:

(I) 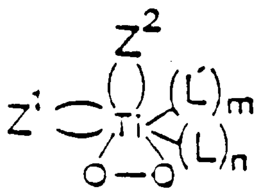 (II) 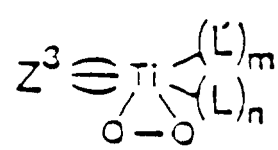

(III) 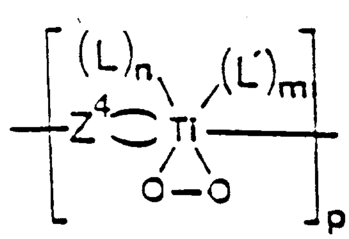

in which n and m, independently of one another, are zero or one, p is a number equal to or greater than 2, $Z^1$ and $Z^2$, which can be the same or different, in each case represent an anion or a bidentate monoanion group, $Z^3$ represents a dianion or a tridentate or tetradentate dianionic group, $Z^4$ represents a bidentate or tridentate dianionic group, L and L', which are the same or different, each represent a molecule of water, an alcohol or a monodentate or bidentate ligand having an electro-donor character.

3. Process according to claim 2, wherein said peroxide complex of titanium complies with one of the general formulas (I), (II) and (III) in which:

- $Z^1$ and $Z^2$, which can be the same or different, are in each case chosen from within the group formed by mono-aromatic or polyaromatic heterocyclic nitrogenous compounds having at least one carboxyl group adjacent to the nitrogen, which are substituted or unsubstituted by at least one group Y chosen from within the group formed by an alkyl, aryl, alkyloxy, aryloxy, nitro, carboxylate, carboxyamide, hydroxyl and halogen group, 8-hydroxyquinoline, 5 or 8-hydroxyquinoxaline, 8-hydroxyquinazoline, 8-hydroxycinnoline, 4 or 5-hydroxyacridine, 1,-4,-6 or 9-hydroxyphenazine and derivatives of these hydroxylated, heterocyclic nitrogenous compounds substituted by at least one group T chosen from within the group formed by an alkyl, aryl, alkyloxy, aryloxy, nitro, carboxylate, carboxyamide and halogen group;
- $Z^3$ and $Z^4$, which can be the same or different, are in each case a monoaromatic or polyaromatic heterocyclic nitrogenous compound having at least two carboxylic groups, whereof at least one is adjacent to a nitrogen atom, substituted or not by at least one group Y, as defined hereinbefore;
- L and L', which can be the same or different, each represent a molecule of water, an alcohol or a ligand chosen from within the group formed by an aromatic amine, a linear or cyclic amide, a phosphorus amide, an aliphatic or aromatic amine oxide, an oxide of phosphine, arsine or stibine, a 1,3-diketone compound and a hydroxy aromatic compound having a ketone or aldehyde group in the ortho-position of the hydroxyl group.

**4.** Process according to either of the claims 2 and 3, wherein said peroxide complex of titanium complies with the general formula (I), in which $Z^1$ and $Z^2$, which can be the same or different, in each case represent a compound chosen from within the group formed by picolinic acid, pyrazine 2 or 6-carboxylic acid, quinoline-2-carboxylic acid, isoquinoline 1 or 3 carboxylic acid, 3-, 4-, 5- and 6-chloro, bromo, nitro, hydroxy, methyl, ethyl, propyl, butyl, phenyl and benzyl picolinic acids and 8-hydroxyquinoline.

**5.** Process according to either of the claims 2 and 3, wherein said peroxide complex of titanium complies with the general formula (II), in $Z^3$ is chosen from within the group formed by pyridine 2,6-dicarboxylic acid, pyrazine 2,6-dicarboxylic acid, isoquinoline 1,3-dicarboxylic acid, pyrimidine 2,4 or 2,6-dicarboxylic acid and 3-, 4-and 5-chloro, bromo, nitro, hydroxy, methyl, ethyl, propyl, butyl, phenyl and benzyl dipicolinic acids.

**6.** Process according to either of the claims 2 and 3, wherein said peroxide complex of titanium complies with the general formula (III), in which $Z^4$ is chosen from within the group formed by pyridine 2,3-, 2,4-, 2,5- or 2,6-dicarboxylic acid, pyrazine 2,3-, 2,5- or 2,6-dicarboxylic acid, isoquinoline 1,3-, 3,4- or 1,8-dicarboxylic acid, quinoline 2,3-, 2,4- or 2,8-dicarboxylic acid, pyrimidine 2,4-, 2,6-, 4,5- or 5,6-dicarboxylic acid and 3-, 4- and 5-chloro, bromo, nitro, hydroxy, methyl, ethyl, propyl, butyl, phenyl and benzyl dipicolinic acids.

**7.** Process according to any one of the claims 2 to 6, wherein the peroxide complex of titanium complies with one of the general formulas (I), (II) or (III), in which L and L', which can be the same or different, each represent a compound chosen from within the group formed by water, methanol, acetylacetone, phthalicilic aldehyde, orthohydroxyacetophenone, pyridine, quinoline, acridine, 2-, 3- and 4-picolines, collidine, 4-dimethylaminopyridine, picolinic acid, methylpicolinate, nicotinic acid, isonicotinic acid, N-methylimidazole, 2,2-dipyridine, orthopenanthroline, dimethyl formamide, diethyl formamide, dimethylacetamide, N,N-dimethylbenzamide, N,N-diethylnicotinamide, N-acetylmorpholine, N-benzoylpiperidine, N-formyl-piperidine, N-acetylpiperidine, N-methylpyrrolidone, N-ethylpyrrolidone, N-phenylpyrrolidone, N-methylvalerolactam, N-methylcaprolactam, N,N-diethylpicolinamide, N,N-dimethypicolinamide, hexamethylorthophosphorus triamide, hexaethylorthophosphorus triamide, octamethylpyrophosphorus amide, trimethylamine oxide, N-methylmorpholine oxide, pyridine oxide, the oxide of 2-, 3- and 4-picolines, quinoline oxide, 2,2'-dipyridine-N-oxide, triphenylphosphine oxide, triphenylarsine oxide, triphenylstibine oxide, trimethylphosphine oxide, methyldiphenylphosphine oxide, diethylphenylphosphine oxide and trimorpholinophosphine oxide.

**8.** Process according to any one of the claims 1 to 7, wherein use is also made of at least one cocatalyst chosen from within the group formed by quaternary ammonium and/or phosphonium salts of general formula $(R^{10}R^{11}R^{12}R^{13}M)+X-$ in which M represents nitrogen or phosphorus, X- represents a chlorine anion or a bromine anion and $R^{10}$, $R^{11}$, $R^{12}$ and $R^{13}$, which can be the same or different, in each case represent a hydrogen atom or a hydrocarbon group having 1 to 30 carbon atoms.

9. Process according to any one of the claims 1 to 8 for the condensation of at least one epoxide on at least one cyclic anhydride of a saturated or unsaturated, neighbouring dicarboxylic acid.

10. Process according to claim 9, wherein the cyclic anhydride is chosen from within the group formed by maleic anhydride, citraconic anhydride, halomaleic anhydrides, succinic anhydride, alkenylsuccinic or polyalkenylsuccinic anhydrides, phthalic anhydride, phthalic anhydrides substituted by at least one halogen atom and/or at least one alkyl group, trimellitic anhydride, cyclohexane-1,2-dicarboxylicic anhydride, cyclohexane-1,2-dicarboxylic anhydrides substituted by at least one halogen atom and/or at least one alkyl group, nadic anhydride, nadic anhydrides substituted by at least one halogen atom and/or at least one alkyl group, glutaric anhydride, glutaric anhydrides substituted by at least one halogen atom and/or at least one alkyl group, glutaconic anhydride and glutaconic anhydride substituted by at least one halogen atom and/or at least one alkyl group.

11. Process according to any one of the claims 1 to 10, for condensation on at least one cyclic anhydride of a dicarboxylic acid of at least one epoxide complying with the following general formula:

(IV) 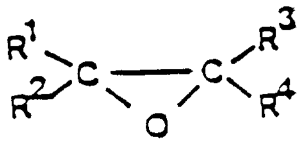

in which $R^1$ and $R^3$, which can be the same or different, each represent a hydrogen atom or a lower alkyl group having 1 to 4 carbon atoms, $R^2$ and $R^4$, which can be the same or different, each represent a hydrogen atom, a hydrocarbon group, substituted or not by at least one halogen atom, having 1 to 30 carbon atoms, a group of formula $R^5$-O-$R^6$, which $R^5$ represents a hydrocarbon group, substituted or not by at least one halogen atom, having 1 to 30 carbon atoms and $R^6$ represents a divalent hydrocarbon group having 1 to 30 carbon atoms and in which $R^2$ can also represent a group of formula

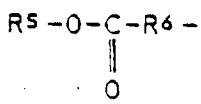

or a group of formula

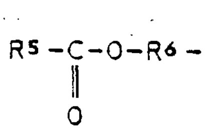,

in which $R^5$ and $R^6$ have the definitions given hereinbefore and in which $R^2$ and $R^4$ can form together with the carbon atoms to which they are bonded a saturated or unsaturated cycle having 4 to 30 carbon atoms.

**Patentansprüche**

1. Kondensationsverfahren von mindestens einem Epoxid mit mindestens einem cyclischen Anhydrid einer Dicarbonsäure in Gegenwart von mindestens einem Katalysator, der aus mindestens einem peroxidischem Titankomplex vom Peroxotyp besteht.

2. Verfahren nach Anspruch 1, bei dem der besagte peroxidische Titankomplex einer der folgenden allgemeinen Formeln entspricht:

(I) 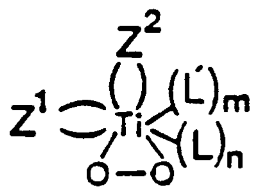

(II) 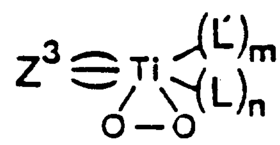

(III) 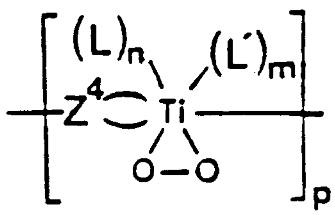

in denen n und m, unabhängig voneinander, null oder eins sind, p eine Zahl größer oder gleich 2 ist, $Z^1$ und $Z^2$, identisch voneinander verschieden, jeder ein Anion oder eine bidentate monoanionische Gruppierung darstellen, $Z^3$ ein Dianion oder eine dianionische tri- oder tetradentate Gruppierung darstellt, $Z^4$ eine dianionische bi- oder tridentate Gruppierung darstellt, L und L', identisch oder voneinander verschieden, jeder ein Wassermolekül, einen Alkohol oder einen monodentaten oder bidentaten Liganden mit Elektronendonor-Charakter darstellen.

**3.** Verfahren nach Anspruch 2, bei dem der besagte peroxidische Titankomplex einer der allgemeinen folgenden Formeln (I) (II) oder (III) entspricht, in denen:
-$Z^1$ und $Z^2$, identisch oder von einander verschieden, jeweils aus der von den mono- oder polyaromatischen stickstoffhaltigen heterocyclischen Verbindungen gebildeten Gruppe gewählt werden, die mindestens eine Carboxigruppe in vicinaler Stellung zum Stickstoff besitzen, eventuell mit mindestens einer Gruppierung Y substituiert, die aus der von den Alkylgruppen, Arylgruppen, Alkyloxi-, Aryloxi-, Nitro-, Carboxilat-, Carboxiamid-, Hydroxi- und Halogenidgruppen (Chlor, Brom, Fluor oder Iod), 8-Hydroxichinolin, 5- oder 8-Hydroxichinoxalin, 8-Hydroxichinazolin, 8-Hydroxicinnolin, 4- oder 5-Hydroxiacridin, 4-, 6- oder 9-Hydroxyphenazin gebildeten Gruppe gewählt wird und aus den Derivaten dieser hydoxilierten stickstoffhaltigen heterocyclischen Verbindungen, die mit mindestens einer Gruppierung T substiuiert sind, die aus der von den von der Alkylgruppen, Arylgruppen, Alkyloxi-, Aryloxi-, Nitro-, Carboxilat-, Carboxiamid-, Hydroxi- und Halogenidgruppen (Chlor, Brom, Fluor oder Iod) gebildeten Gruppe gewährt wird;

- $Z^3$ und $Z^4$, identisch oder voneinander verschieden, jeder eine mono- oder polyaromatische stickstoffhaltige heterocyclische Verbindung ist, die mindestens zwei Carboxigruppen besitzt, von denen wenigstens eine in vicinaler Stellung zu einem Stickstoffatom steht und eventuell mit mindestens einer Gruppierung Y substituiert ist, die wie oben definiert ist;
- L und L', identisch oder von einander verschieden, jeder ein Wassermolekül, einen Alkohol oder einen Liganden darstellen, der vorzugsweise aus der Gruppe gewählt wird, die von aromatischen Aminen, linearen oder cyclischen Aminen, Phosphoramiden, Oxiden eines aliphatischen oder aromatischen Amins, Oxiden von Phosphin, Arsin oder Stibin, 1,3-Diketoverbindungen und hydroxiaromatischen Verbindungen, die eine Ketogruppe oder eine Aldehydgruppe in ortho-Stellung zur Hydroxigruppe besitzt, gebildet wird.

**4.** Verfahren nach einem der Ansprüche 2 und 3, bei dem der besagte peroxidische Titankomplex der allgemeinen Formel (I) entspricht, in der $Z^1$ und $Z^2$, identisch oder voneinander verschieden, jeder eine Verbindung darstellt, die aus der von der von Picolinsäure, Pyrazin-2- oder 6-carbonsäure, Chinolin-2-carbonsäure, Isochinolin-1- oder 3-carbonsäure, den 3-, 4-, 5- und 6- Chlor-, Brom-, Nitro-, Hydroxi-, Methyl-, Ethyl-, Propyl-, Butyl-, Phenyl- und Benzylpicolincarbonsäuren gebildeten Gruppe gewählt wird.

5. Verfahren nach einem der Ansprüche 2 und 3, bei dem der besagte peroxidische Titankomplex der allgemeinen Formel (II) entspricht, in der $Z^3$ aus der von Pyridin-2,6-dicarbonsäure, Pyrazin-2,6-dicarbonsäure, Isochinolin-1,3-dicarbonsäure, Pyrimidin-2,4- oder 2,6-dicarbonsäure und den 3-, 4- und 5- Chlor-, Brom-, Nitro-, Hydroxi-, Methyl-, Ethyl-, Propyl-, Butyl-, Phenyl- und und Benzylpicolindicarbonsäuren gebildeten Gruppe gewählt wird.

6. Verfahren nach einem der Ansprüche 2 und 3, bei dem der besagte peroxidische Titankomplex der allgemeinen Formel (III) entspricht, in der $Z^4$ aus der von Pyridin-2,3-, 2,4- oder 2,6-dicarbonsäure, Pyrazin- 2,3-, 2,4- oder 2,6-dicarbonsäure, Isochinolin-1,3-, 3,4- oder 1,8-dicarbonsäure, Chinolin-2,3-, 2,4 oder 2,8-dicarbonsäure, Pyrimidin-2,4-, 2,6-, 4,5- oder 5,6-dicarbonsäure und den 3-, 4- und 5-Chlor-, Brom-, Nitro-, Hydroxi-, Methyl-, Ethyl-, Propyl-, Butyl-, Phenyl- und Benzylpicolindicarbonsäuren gebildeten Gruppe gewählt wird.

7. Verfahren nach einem der Ansprüche 2 bis 6, bei dem der besagte peroxidische Titankomplex einer der allgemeinen Formeln (I), (II) oder (III) entspricht, in der L und L', identisch oder voneinander verschieden, jeder eine Verbindung darstellt, die aus der von Wasser, Methanol, Acetylaceton, Salicylaldehyd, ortho-Hydroxiacetophenon, Pyridin, Chinolin, Acridin, 2-, 3- und 4-Picolin, Collidin, 4-Dimethylaminopyridin, Picolinsäure, Methylpicolinat, Nicotinsäure, Isonicotinsäure, N-Methylimidazol, 2,2'-Bipyridin, ortho-Phenantrolin, Dimethylformamid, Diethylformamid, Dimethylacetamid, N,N-Dimethylbenzamid, N,N-Diethylnicotinamid, N-Acetylmorpholin, N-Benzoylpiperidin, N-Formylpiperidin, N-Acetylpiperidin, N-Methylpyrrolidon, N-Ethylpyrrolidon, N-Phenylpyrrolidon, N-Methylvalerolactam, N-Methylcaprolactam, N,N-Diethylpicolinamid, N,N-Dimethylpicolinamid, Hexamethyl-ortho-phosphortrisamid, Hexaethyl-ortho-phosphortrisamid, Octamethyl-pyro-phosphortrisamid, Trimethylaminoxid, N-Methylmorpholinoxid, Pyridinoxid, 2-, 3- und 4-Picolinoxid, Chinolinoxid, 2,2'-Bipyridin-N-oxid,Triphenylphosphinoxid, Triphenylarsinoxid, Triphenylstibinoxid, Trimethylphosphinoxid, Methyldiphenylphosphinoxid, Diethylphenylphosphinoxid und Trimorpholinophosphinoxid gebildeten Gruppe gewählt wird.

8. Verfahren nach einem der Ansprüche 1 bis 7, in dem darüber hinaus mindestens ein Kokatalysator verwendet wird, der aus der von den quartären Ammonium- und/oder Phosphoniumsalzen gebildeten Gruppe, die der allgemeinen Formel $(R^{10}R^{11}R^{12}R^{13}M)^+X^-$ entsprechen, in der M Stickstoff oder Phosphor darstellt, $X^-$ ein Chlor- oder ein Brom-Anion und $R^{10}$, $R^{11}$, $R^{12}$ und $R^{13}$, identisch oder voneinander verschieden, ein Wasserstoffatom oder eine Kohlenwasserstoffgruppe mit einem bis 30 Kohlenstoffatomen darstellen, gewählt wird.

9. Verfahren nach einem der Ansprüche 1 bis 8 zur Kondensation von mindestens einem Epoxid mit mindestens einem cyclischen Anhydrid einer vicinalen gesättigten oder ungesättigten Carbonsäure.

10. Verfahren nach Anspruch 9, bei dem das cyclische Anhydrid aus der von Maleinsäureanhydrid, Citraconsäureanhydrid, den Halogenmaleinsäureanhydriden, Bernsteinsäureanhydrid, den Alkenylbernsteinsäureanhydriden oder den Polyalkenylbernsteinsäureanhydriden, Phthalsäureanhydrid, den mit mindestens einem Halogenatom und/oder mindestens einer Alkylgruppe substituierten Phthalsäureanhydriden, Trimellitsäureanhydrid, Cyclohexan-1,2-dicarbonsäureanhydrid, den mit mindestens einem Halogenatom und/oder mindestens einer Alkylgruppe substituierten Cyclohexan-1,2-dicarbonsäureanhydriden, Nadinsäureanhydrid, den mit mindestens einem Halogenatom und/oder mindestens einer Alkylgruppe substituierten Nadinsäureanhydriden, Glutarsäureanhydrid, den mit mindestens einem Halogenatom und/oder mindestens einer Alkylgruppe substituierten Glutarsäureanhydriden, Glutaconsäureanhydrid und den mit mindestens einem Halogenatom und oder mindestens einer Alkylgruppe substituierten Glutaconsäureanhydriden gebildeten Gruppe gewählt wird.

11. Verfahren nach einem der Ansprüche 1 bis 10 zur Kondensation von mindestens einem cyclischen Anhydrid einer Dicarbonsäure mit mindestens einem Epoxid, das der folgenden allgemeinen Formel entspricht:

(IV) 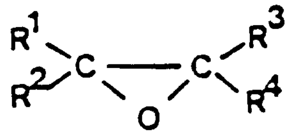

in der $R^1$ und $R^3$, gleich oder voneinander verschieden, jeder ein Wasserstoffatom oder eine niedere Alkylgruppe mit einem bis 4 Kohlenstoffatomen darstellen; $R^2$ und $R^4$, identisch oder voneinander verschieden, jeder ein Wasserstoffatom oder eine Kohlenwasserstoffgruppe, eventuell substituiert mit mindestens einem Halogenatom, die zwischen einem und 30 Kohlenstoffatomen besitzt, eine Gruppe der Formel $R^5$-O-$R^6$-, in der $R^5$ eine Kohlenwasserstoffgruppe darstellt, die eventuell mit mindestens einem Halogenatom substituiert ist und ein bis 30 Kohlenstoffatome besitzt und $R^6$ eine divalente Kohlenwasserstoffgruppe mit einem bis 30 Kohlenstoffatomen darstellt, darstellen, $R^2$ kann auch eine Gruppe der Formel

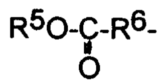

oder eine Gruppe der Formel:

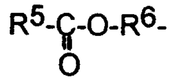

darstellen, bei denen $R^5$ und $R^6$ die oben gegebene Definition haben; $R^2$ und $R^4$ können auch zusammen mit den Kohlenstoffatomen, an die sie gebunden sind, einen gesättigten oder ungesättigten Zyklus mit zum Beispiel 4 bis 30 Kohlenstoffatomen bilden.

FIG.1

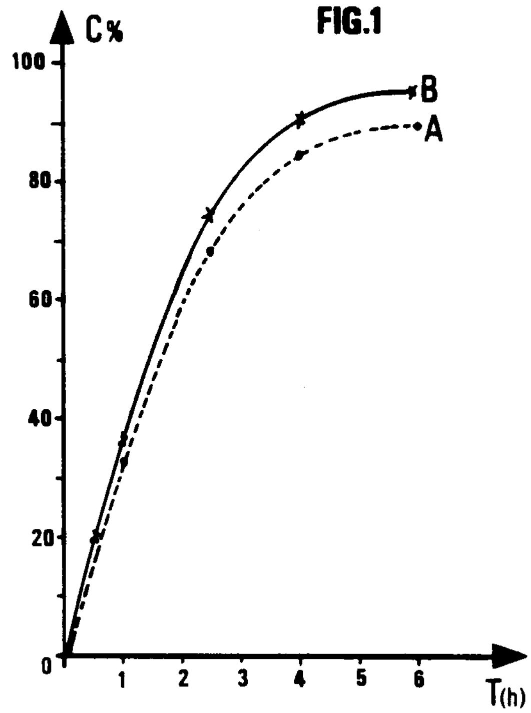


FIG.2

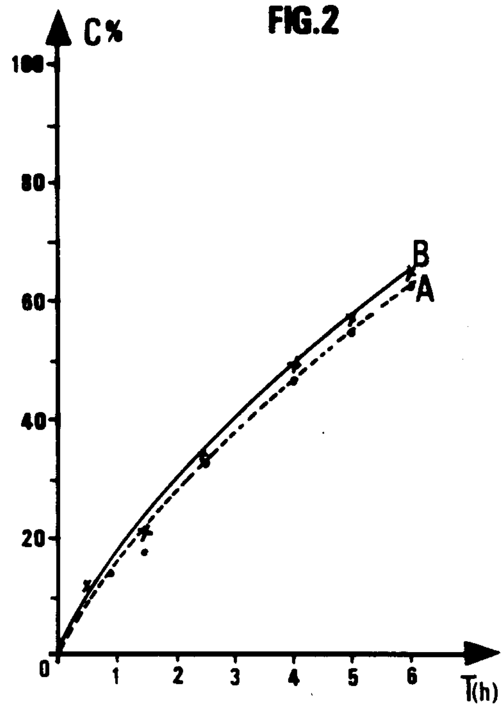


FIG.3

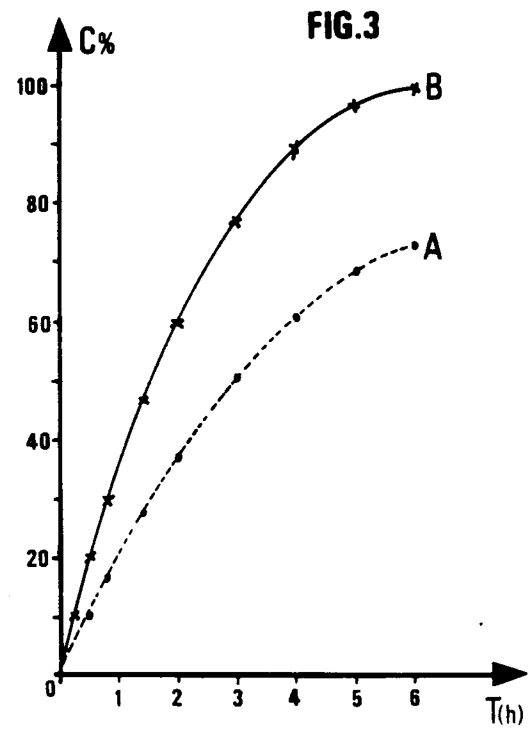


FIG.4

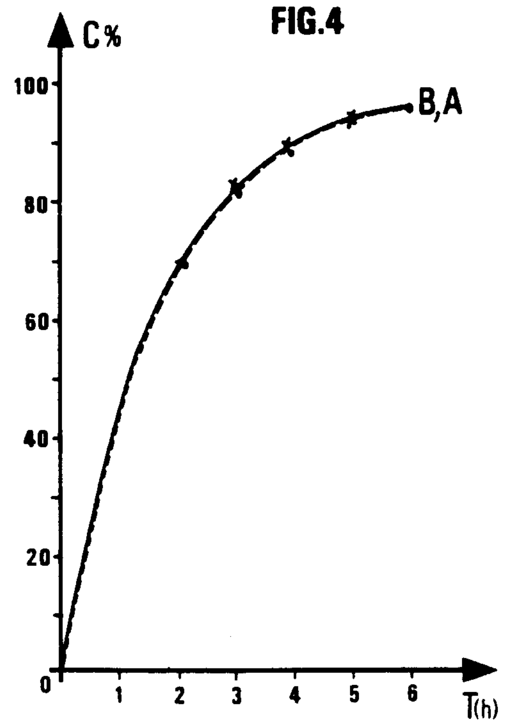

FIG.5

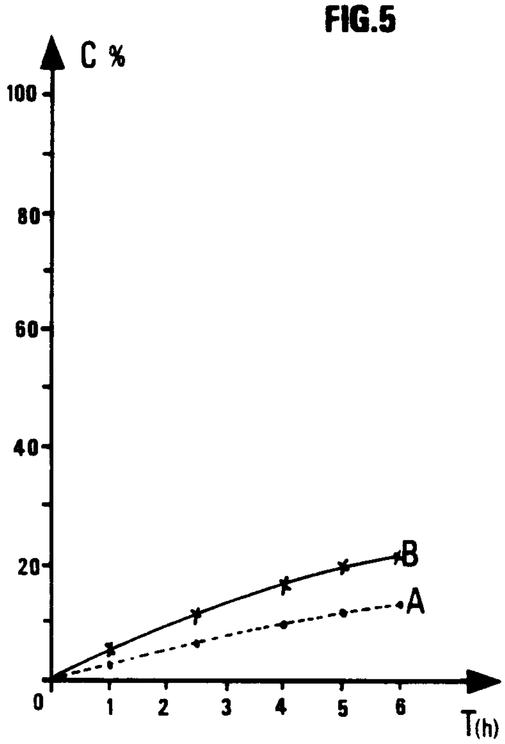


FIG.6

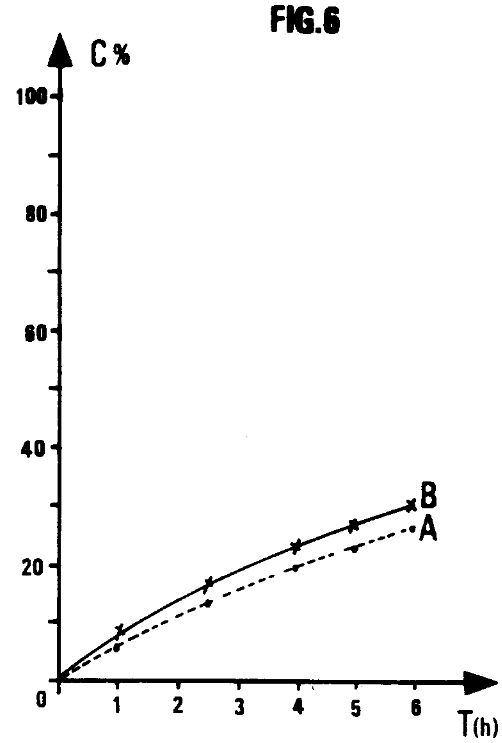


FIG.7

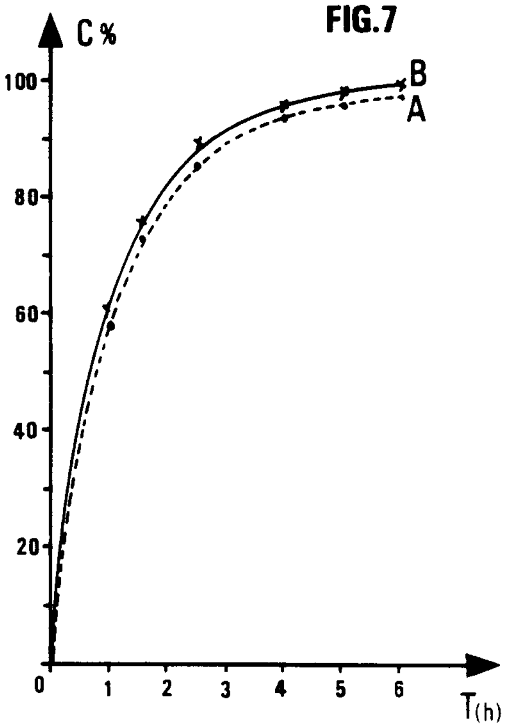


FIG.8